(19) Europäisches Patentamt / European Patent Office / Office européen des brevets

(11) **EP 4 708 971 A1**

(12) **EUROPEAN PATENT APPLICATION**
published in accordance with Art. 153(4) EPC

(43) Date of publication:
**11.03.2026 Bulletin 2026/11**

(21) Application number: **24832514.4**

(22) Date of filing: **28.06.2024**

(51) International Patent Classification (IPC):
**H04W 48/08** (2009.01)     **H04W 48/16** (2009.01)
**H04W 40/24** (2009.01)     **H04W 72/0446** (2023.01)
**H04L 27/26** (2006.01)     **H04W 56/00** (2009.01)
**H04W 84/12** (2009.01)

(52) Cooperative Patent Classification (CPC):
**H04L 27/26; H04W 40/24; H04W 48/08;
H04W 48/16; H04W 56/00; H04W 72/0446;
H04W 84/12**

(86) International application number:
**PCT/KR2024/009128**

(87) International publication number:
**WO 2025/005738 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 KR 20230085246**

(71) Applicant: **Samsung Electronics Co., Ltd.
Suwon-si, Gyeonggi-do 16677 (KR)**

(72) Inventors:
• **SEO, Seungbeom**
  **Suwon-si, Gyeonggi-do 16677 (KR)**
• **OH, Hyunseob**
  **Suwon-si, Gyeonggi-do 16677 (KR)**
• **CHOI, Junyoung**
  **Suwon-si, Gyeonggi-do 16677 (KR)**
• **HAN, Sehee**
  **Suwon-si, Gyeonggi-do 16677 (KR)**

(74) Representative: **HGF
HGF Limited
4th Floor, 1 City Square
Leeds LS1 2ES (GB)**

(54) **METHOD AND APPARATUS FOR CONFIGURING DISCOVERY WINDOW FOR WI-FI AWARE COMMUNICATION**

(57) An electronic device for performing Wi-Fi Aware communication according to an embodiment of the present disclosure comprises a transceiver and a processor. The processor may perform control to transmit, to a second electronic device, a frame including a first index for an interval of a discovery window (DW) used for Wi-Fi Aware communication and a second index for a duration of the DW. The processor may perform control to perform Wi-Fi Aware communication with the second electronic device in the DW configured on the basis of the first index and the second index.

FIG. 8

## Description

[Technical Field]

The disclosure relates to a method for setting a discovery window for Wi-Fi aware communication.

[Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

Wi-Fi CERTIFIED Wi-Fi Aware™ (Wi-Fi Aware) is a technology that extends the capabilities of Wi-Fi by enabling rapid discovery, connection, and data exchange with other Wi-Fi devices without the need for traditional network infrastructure, Internet connection, or GPS signals. Wi-Fi aware may provide the function of enabling a mutual search and direct connection between devices even without any other type of connection. Wi-Fi aware may also be referred to as neighbor awareness networking (NAN).

[Detailed Description of the Invention]

[Technical Problem]

The disclosure relates to a method for adaptively adjusting a discovery window for Wi-Fi aware communication.

[Technical Solution]

According to an embodiment of the disclosure, a method of operating a first electronic device performing Wi-Fi aware communication may include transmitting a frame including a first index related to an interval of a discovery window (DW) used in Wi-Fi aware communication and a second index related to a duration of the DW to a second electronic device; and performing Wi-Fi aware communication with the second electronic device in a DW set based on the first index and the second index.

According to an embodiment of the disclosure, a method of operating a second electronic device performing Wi-Fi aware communication may include receiving a frame including a first index related to an interval of a discovery window (DW) used in Wi-Fi aware communication and a second index related to a duration of the DW from a first electronic device; and performing Wi-Fi aware communication with the first electronic device in a DW set based on the first index and the second index.

According to an embodiment of the disclosure, a first electronic device performing Wi-Fi aware communication includes a transceiver; and a processor. The processor may control to transmit a frame including a first index related to an interval of a discovery window (DW) used in Wi-Fi aware communication and a second index related to a duration of the DW to a second electronic device, and perform Wi-Fi aware communication with the second electronic device in a DW set based on the first index and the second index.

According to an embodiment of the disclosure, a second electronic device performing Wi-Fi aware communication includes a transceiver; and a processor. The processor may receive a frame including a first index related to an interval of a discovery window (DW) used in Wi-Fi aware communication and a second index related to a duration of the DW from a first electronic device, and perform Wi-Fi aware communication with the first electronic device in a DW set based on the first index and the second index.

[Advantageous Effects]

A method and device according to an embodiment of the disclosure may support efficient service discovery between Wi-Fi Aware devices.

Further, a method and device according to an embodiment of the disclosure may enhance communication efficiency by setting an efficient discovery window during Wi-Fi Aware communication.

[Brief Description of the Drawings]

FIG. 1 illustrates a communication system including an access point and a station.

FIG. 2A illustrates operations of an access point and a station for establishing a Wi-Fi connection.

FIG. 2B illustrates operations of a first station and a second station for a Wi-Fi Aware connection.

FIG. 3 is a view illustrating time resource allocation for AP communication and Wi-Fi Aware communication of a station according to an embodiment of the disclosure.

FIG. 4 is a view illustrating a Wi-Fi Aware Discovery procedure according to an embodiment of the disclosure.

FIGS. 5A to 5C illustrate examples of Continuity Service where Wi-Fi Aware-based communication may be used.

FIG. 6A illustrates an example of Wi-Fi Aware-based communication according to an embodiment of the disclosure.

FIG. 6B illustrates an example of Wi-Fi Aware-based communication according to an embodiment of the disclosure.

FIG. 7 is a view illustrating a discovery window during Wi-Fi Aware communication according to an embodiment of the disclosure.

FIG. 8 is a view illustrating an operation of managing a discovery window during Wi-Fi Aware communication according to an embodiment of the disclosure.

FIG. 9 is a view illustrating a contention mitigation method within a discovery window during Wi-Fi Aware communication according to an embodiment of the disclosure.

FIGS. 10 and 11 are views illustrating a method of limiting the number of Wi-Fi Aware devices within a discovery window used during Wi-Fi Aware communication according to an embodiment of the disclosure.

FIG. 12 illustrates an example of setting the duration of an adaptive discovery window used during Wi-Fi Aware communication according to an embodiment of the disclosure.

FIG. 13 illustrates an example of adjusting the interval of an adaptive discovery window used during Wi-Fi Aware communication according to an embodiment of the disclosure.

FIG. 14 illustrates an example of a cluster to which an adaptive discovery window used during Wi-Fi Aware communication is applied according to an embodiment of the disclosure.

FIG. 15 illustrates an example of an adaptive discovery window used during Wi-Fi Aware communication according to an embodiment of the disclosure.

FIG. 16 illustrates an example of a cluster to which an adaptive discovery window used during Wi-Fi Aware communication is applied according to an embodiment of the disclosure.

FIG. 17 illustrates an example of an adaptive discovery window used during Wi-Fi Aware communication according to an embodiment of the disclosure.

FIG. 18 illustrates an example of adjusting the interval of an adaptive discovery window used during Wi-Fi Aware communication according to an embodiment of the disclosure.

FIG. 19 is a view illustrating a structure of a first electronic device according to an embodiment of the disclosure.

FIG. 20 is a view illustrating a structure of a second electronic device according to an embodiment of the disclosure.

[Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numerals refer to the same components throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, each of the station (STA), the transmission device, the reception device, and the electronic device may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to by other terms. Each of the station, the transmission device, the reception device, and the electronic device may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, each of the station, the transmission device, the reception device, and the electronic device may include a machine to machine (M2M) terminal and a machine-type communication (MTC) terminal/device, but is not limited thereto. In the disclosure, each of the station, the transmission device, the reception device, and the electronic device may be simply referred to as a device.

In the disclosure, "wireless local area network (WLAN)" and "Wi-Fi" may be used interchangeably. Although the disclosure describes a WLAN system including at least one access point (AP) and at least one station (STA) for convenience of description, embodiments of the disclosure are applicable to other WLAN systems including, e.g., a plurality of WLANs, peer-to-peer (or independent basic service set) systems, Wi-Fi Direct systems, and/or hot spots.

Wi-Fi CERTIFIED Wi-Fi Aware™ (Wi-Fi Aware) is a technology that extends the capabilities of Wi-Fi by enabling rapid discovery, connection, and data exchange with other Wi-Fi devices without the need for traditional network infrastructure, Internet connection, or GPS signals. Wi-Fi aware may provide the function of enabling a mutual search and direct connection between devices even without any other type of connection. Wi-Fi aware may also be referred to as neighbor awareness networking (NAN).

Wi-Fi aware networking may work by forming a cluster with a peripheral device or by creating a new cluster if the device is the first device in the area. An application may communicate with a Wi-Fi aware system service that manages the device's Wi-Fi aware hardware using an application programming interface (Wi-Fi aware API). For example, a Wi-Fi aware network connection may support higher processing speeds over long distances where Bluetooth connections are not reachable. For example, the Wi-Fi aware network connection may be useful for apps that share large amounts of data between users, such as photo-sharing apps.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

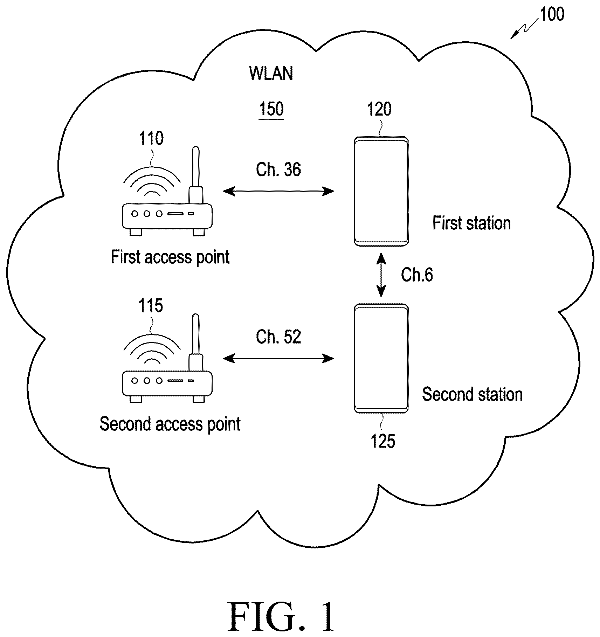

FIG. 1 illustrates a communication system 100 including an access point (AP) and a station (STA).

Referring to FIG. 1, a communication system 100 may include a wireless local area network (WLAN) 150 composed of a plurality of wireless access points (APs) 110, 115 and a plurality of stations (STAs) 120, 125. For convenience of description, only two access points (APs) 110, 115 and two stations (STAs) 120, 125 are illustrated in FIG. 1, but the WLAN 150 may include any number of access points (APs) and any number of stations (STAs).

The stations (STAs) 120, 125 may include at least one transceiver, at least one processor, and/or at least one memory. The at least one memory may include a non-transitory computer readable medium storing instructions for the access points (APs) 110, 115 to perform operations according to embodiments of the disclosure.

The access points (APs) 110, 115 may be devices that enable one or more stations (STAs) to connect to a network (e.g., a local area network (LAN), a wide area network (WAN), a metropolitan area network (MAN), and/or the Internet) using Wi-Fi, Bluetooth, or any other suitable communication technology. The access points (APs) 110, 115 may include at least one transceiver, at least one processor, and/or at least one memory. The at least one memory may include a non-transitory computer readable medium storing instructions for the access points (APs) 110, 115 to perform operations according to embodiments of the disclosure. According to an embodiment, the access points (APs) 110, 115 may be implemented as hardware devices or software devices.

The at least one transceiver included in the access points (APs) 110, 115 and/or the stations (STAs) 120, 125 may include a Wi-Fi transceiver, a Bluetooth transceiver, a cellular transceiver, and/or other suitable radio frequency (RF) transceiver for transmitting and/or receiving signals. Each transceiver may communicate with other wireless devices in separate operating frequency bands and/or using separate communication protocols. For example, a Wi-Fi transceiver may communicate within a 2.4 GHz frequency band and/or a 5 GHz frequency band according to IEEE 802.11 specifications.

The first station 120 may be connected to the first access point 110 through a first channel (e.g., channel 36 of 5 GHz), and the second station 125 may be connected to the second access point 115 through a second channel (e.g., channel 52 of 5 GHz). The first station 120 may be Wi-Fi Aware (or NAN) connected to the second station 125 through a third channel (e.g., channel 6 of 2.4 GHz).

In the disclosure, a channel used when the stations 120, 125 communicate with the access points 110, 115 is referred to as an AP channel, and a channel used for communication between the stations 120, 125 may be referred to as a Wi-Fi Aware channel (or aware channel).

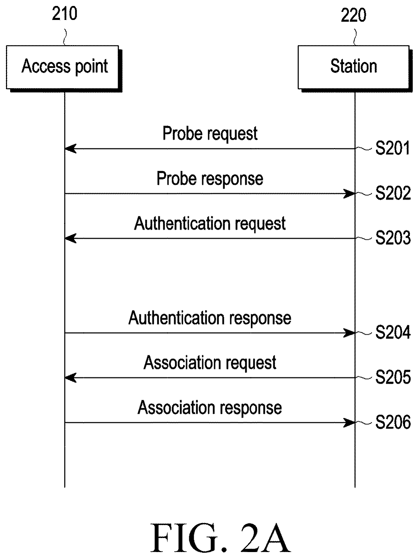

FIG. 2A illustrates operations of an access point (AP) and a station (STA) for establishing a Wi-Fi connection.

Referring to FIG. 2A, a station 220 may transmit or broadcast a probe request message to an access point 210 (S201). For example, the probe request message may include information about at least one communication capability supported by the station 220.

The access point 210 may transmit a probe response message in response to the probe request message (S202). Upon receiving the probe response message, the station 220 may transmit an authentication request message to the access point 210 (S203). The access point 210 may transmit an authentication response message to the station 220 in response to the authentication request message (S204), and an authentication procedure between the access point 210 and the station 220 may be completed.

When the authentication procedure is completed, the station 220 may transmit an association request message to the access point 210 (S205). For example, the association request message may include information about at least one capability (e.g., according to IEEE 802.11 specifications) to be used for data communication between the station 220 and the access point 210. The access point 210 may generate an association ID for the station 220 and transmit an association response message to the station 220 (S206).

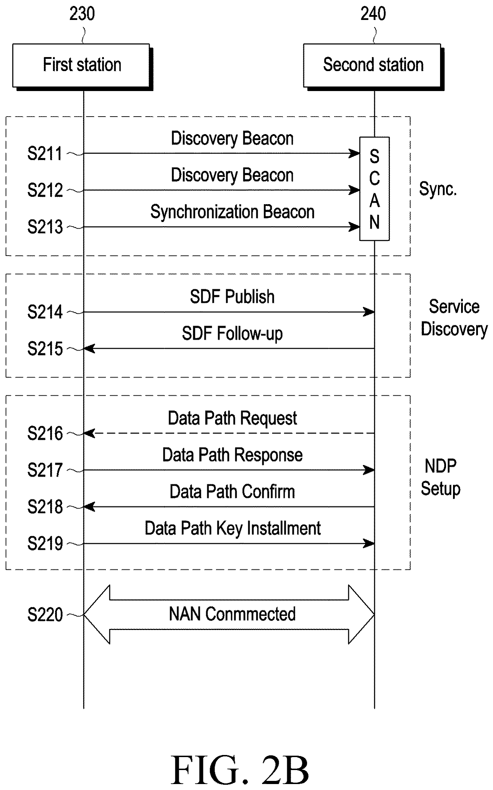

FIG. 2B illustrates operations of a first station and a second station for a Wi-Fi Aware connection.

Referring to FIG. 2B, when the first station 230 and the second station 240 decide to proceed with a Wi-Fi Aware (or NAN) connection, the first station 230 may transmit at least one discovery beacon message to the second station 240 for synchronization (S211, S212). The first station 230 may transmit a synchronization beacon message to the second station 240 (S213). The second station 240 may scan at least one discovery beacon message and synchronization beacon message, and perform a synchronization procedure (or operation) with the first station 230.

The first station 230 may transmit a service discovery frame (SDF) publish message to the second station 240 for service discovery (S214), and the second station 240 may transmit an SDF follow-up message corresponding to the SDF publish message to the first station 230 (S215).

The second station 240 may transmit a data path request message to the first station 230 for NAN data path (NDP) setup (S216), and the first station 230 may transmit a data path response message to the second station 240 (S217). The second station 240 may transmit a data path confirm message to the first station 230 (S218), and the first station 230 may transmit a data path key installment message to the second station 240 (S219). When NDP setup is completed, the first station 230 and the second station 240 may establish a NAN connection (S220).

According to an embodiment, the first station 230 and the second station 240 may exchange information about quality of service (QoS) before the NDP setup procedure. According to an embodiment, the information about the QoS may be included in a QoS field of an SDF message (e.g., SDF Publish message, SDF subscribe message, and/or SDF follow-up message).

According to an embodiment, the first station 230 and the second station 240 may exchange time synchronization function (TSF) information in the service discovery procedure (e.g., S214 and/or S215) to optimize AP and Wi-Fi Aware scheduling. According to an embodiment, the first station 230 and/or the second station 240 may adjust and/or reduce an AP period (or period) for communication with an access point (AP) using the exchanged TSF information. For example, the AP period may be decreased from 8 slots to 5 slots based on the TSF information.

According to an embodiment, when neither the first station 230 nor the second station 240 transmits and/or receives traffic requiring high QoS during communication with an access point, more time resources may be allocated to Wi-Fi Aware communication between the first station 230 and the second station 240. According to an embodiment, the first station 230 and the second station 240 may allocate more time resources to Wi-Fi Aware communication to perform one-hop data transmission (e.g., QuickShare function).

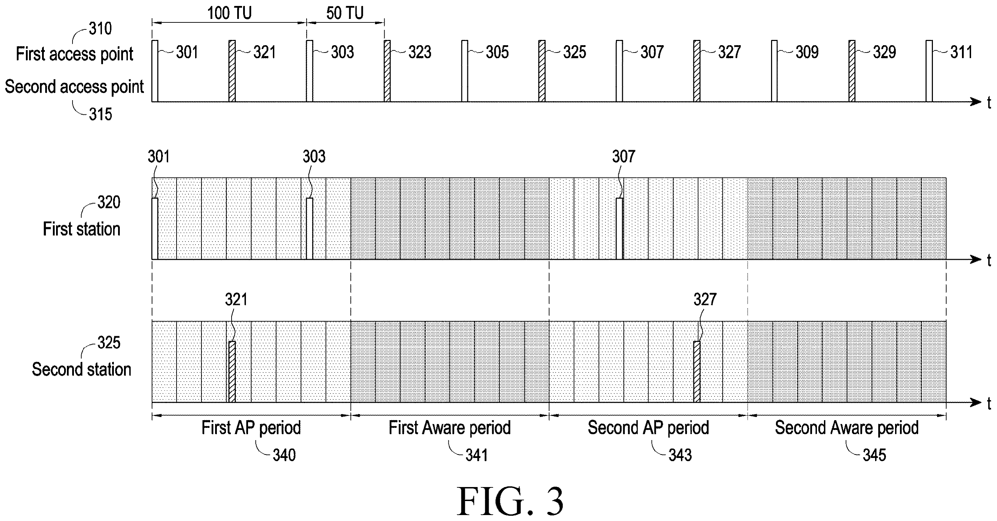

FIG. 3 is a view illustrating time resource allocation for AP communication and Wi-Fi Aware communication of a station according to an embodiment of the disclosure.

Referring to FIG. 3, a communication system may include a first access point 310, a first station 320 connected to the first access point 310, a second access point 315, and a second station 325 connected to the second access point 315. In this case, the first station 320 and the second station 325 may perform Wi-Fi Aware communication.

The first access point 310 may broadcast a plurality of beacons 301, 303, 305, 307, 309, 311 through a first AP channel (e.g., channel 36), and the second access point 315 may broadcast a plurality of beacons 321, 323, 325, 327, 329 through a second AP channel (e.g., channel 52). In the disclosure, beacons broadcast by an access point may also be referred to as AP beacons.

The first access point 310 may broadcast each of the plurality of beacons 301, 303, 305, 307, 309, 311 through the first AP channel (e.g., channel 36) at a set period (e.g., 100 time units (TU)). The second access point 315 may broadcast each of the plurality of beacons 321, 323, 325, 327, 329 through the second AP channel (e.g., channel 52) at a set period (e.g., 100 time units (TU)). For example, a time interval between beacons broadcast by the first access point 310 and beacons broadcast by the second access point 315 may be set to 50 TU.

According to an embodiment, beacons broadcast by the first access point 310 and/or the second access point 315 may include at least one of identity information such as a service set identifier (SSID) and a basic service set identifier (BSSID), frequency information related to transmission/reception of data, and frequency type information.

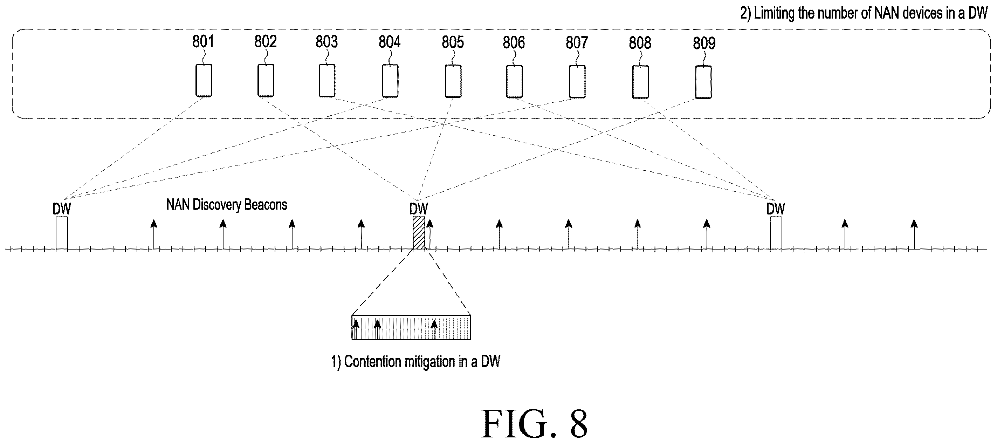

According to an embodiment, 1 slot, which is a time resource allocation unit for AP communication and Wi-Fi Aware communication, may be set to 16 TU. In FIG. 3, 8 slots (=128 TU) may be allocated to each of AP periods 340, 343 for AP communication, and 8 slots (=128 TU) may be allocated to each of Aware periods 341, 345 for Wi-Fi Aware communication.

The first station 320 may receive two beacons 301, 303 broadcast by the first access point 310 during a first AP period 340. The first station 320 may perform Wi-Fi Aware communication with the second station 325 during a first Aware period 341 and may not receive one beacon 305 broadcast by the first access point 310.

The first station 320 may receive one beacon 307 broadcast by the first access point 310 during a second AP period 343. The first station 320 may perform Wi-Fi Aware communication with the second station 325 during a second Aware period 345 and may not receive two beacons 309, 311 broadcast by the first access point 310.

The second station 325 may receive one beacon 321, 303 broadcast by the second access point 315 during the first AP period 340. The second station 325 may perform Wi-Fi Aware communication with the first station 320 during the first Aware period 341 and may not receive two beacons 323, 325 broadcast by the second access point 315.

The second station 325 may receive one beacon 327 broadcast by the second access point 315 during the second AP period 343. The second station 325 may perform Wi-Fi Aware communication with the first station 320 during the second Aware period 345 and may not receive one beacon 329 broadcast by the second access point 315. In FIG. 3, each of the first station 320 and the second station 325 may not receive one or two AP beacons during Wi-Fi Aware communication.

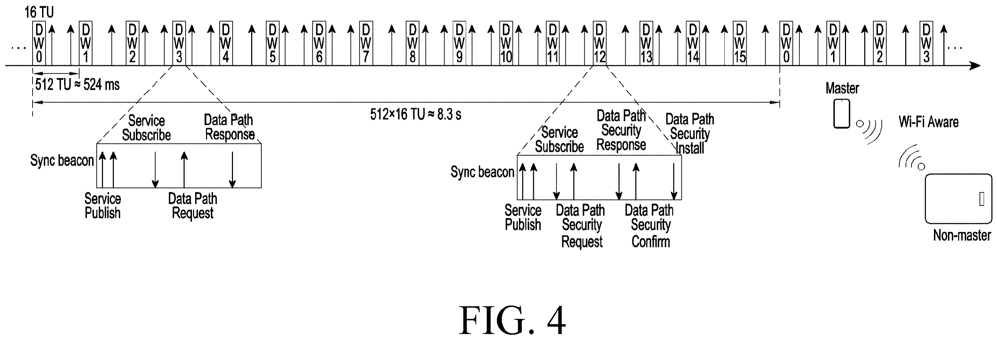

FIG. 4 is a view illustrating a Wi-Fi Aware Discovery procedure according to an embodiment of the disclosure.

Electronic devices supporting Wi-Fi Aware communication may perform Wi-Fi Aware communication-based data communication after completing device discovery and service discovery. Among electronic devices supporting Wi-Fi Aware communication, a master device and a non-master device may perform Wi-Fi Aware communication.

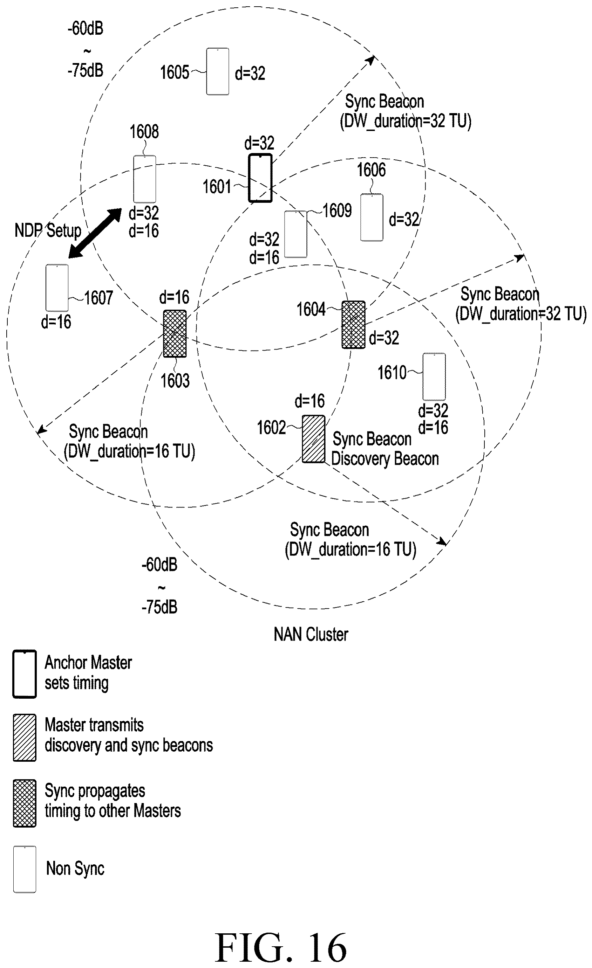

Referring to FIG. 4, a duration for a discovery window (DW) for a Wi-Fi Aware Discovery procedure may be set to 16 time units (TU), and an interval for the DW may be set to 512 TU (=about 524 ms). In FIG. 4, 16 DWs (DW0 to DW15) may be set for the Wi-Fi Aware Discovery procedure. According to an embodiment, the first DW0 period among 16 DW periods may be implemented again after the last DW15 period among the 16 DW periods.

Meanwhile, a service discovery completion time may vary according to the DW interval and DW duration, and data transmission latency may be determined according to the DW interval and DW duration.

Among electronic devices supporting Wi-Fi Aware communication, a master device may broadcast a discovery beacon frame for device discovery at a preset period. According to an embodiment, a master device may skip broadcasting for a discovery beacon frame within the DW.

Each of the electronic devices supporting Wi-Fi Aware communication may transmit and/or receive a service discovery frame for service discovery within the DW.

Among electronic devices supporting Wi-Fi Aware communication, a master device may perform channel switching to a discovery channel in every DW period and perform DW operation.

Among electronic devices supporting Wi-Fi Aware communication, a non-master and/or non-sync state device may perform channel switching to a discovery channel in every DW0 period and perform DW operation. According to an embodiment, a non-master non-sync state device may selectively perform channel switching to a discovery channel for remaining DW periods (at least one of DW1 to DW15) except for DW0 and perform DW operation.

For example, in a DW3 period, a first electronic device (or master device) supporting Wi-Fi Aware communication may transmit a sync beacon to a second electronic device (or non-master device) supporting Wi-Fi Aware communication. The first electronic device and the second electronic device may exchange at least one of a service publish message, a service subscribe message, a data path request message, and a data path response message.

For example, in a DW12 period, a first electronic device (or master device) supporting Wi-Fi Aware communication may transmit a sync beacon to a second electronic device (or non-master device) supporting Wi-Fi Aware communication. The first electronic device and the second electronic device may exchange at least one of a service publish message, a service subscribe message, a data path security request message, a data path security response message, a data path security confirm message, and a data path security install message.

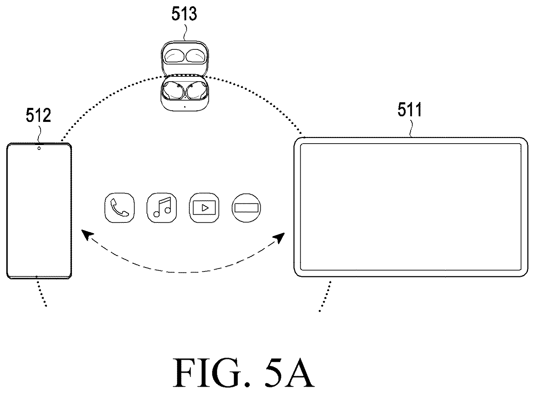

FIGS. 5A to 5C illustrate examples of Continuity Service where Wi-Fi Aware-based communication may be used. Using Wi-Fi Aware-based communication, natural service linkage and switching operations may be performed between devices (of different types) authenticated with the same account.

Compared to providing Continuity Service based on BLE, when providing Continuity Service based on Wi-Fi Aware, Wi-Fi Aware may have faster data transmission speed than BLE but relatively higher power consumption.

Referring to FIG. 5A, a wireless earphone 513 is connected to a first electronic device (e.g., tablet PC) 511, and the first electronic device 511 and a second electronic device (e.g., mobile phone) 512 may perform Wi-Fi Aware-based communication.

When a call starts on the second electronic device 512, the wireless earphone 513 may automatically connect to the second electronic device 512 through Wi-Fi Aware-based communication between the first electronic device 511 and the second electronic device 512.

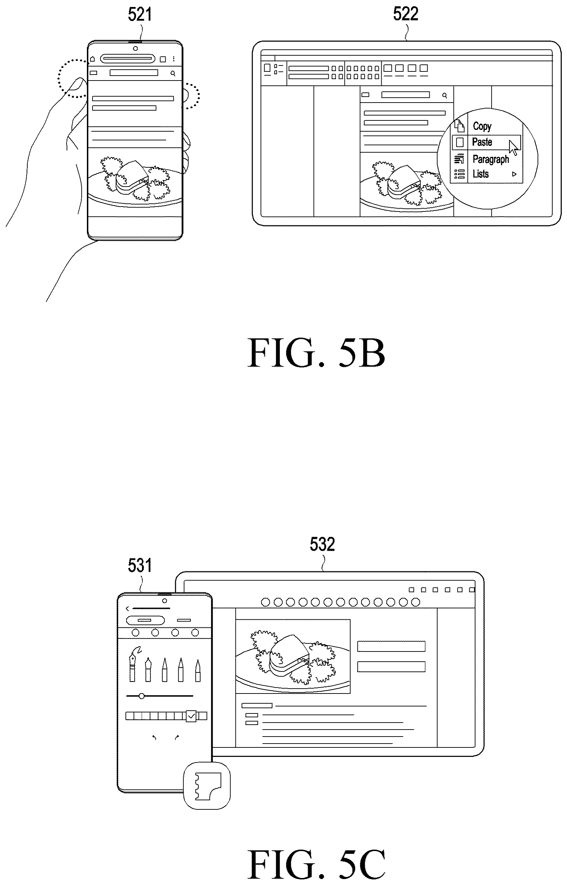

Referring to FIG. 5B, using Wi-Fi Aware-based communication between a first electronic device (e.g., mobile phone) 521 and a second electronic device (e.g., tablet PC) 522, when a user performs a copy function on an image and/or text on a screen in the first electronic device 521, a paste function corresponding to the copy function may be performed in the second electronic device 522.

Referring to FIG. 5C, a first electronic device (e.g., mobile phone) 531 and a second electronic device (e.g., tablet PC) 532 may simultaneously use one application using Wi-Fi Aware-based communication (In-app collaboration). For example, characteristics of a pen to be used in an application may be selected and used according to a user input in the first electronic device 531, and a result according to the user input may be displayed in the second electronic device 532.

Latency requirements for each service of Continuity Service where Wi-Fi Aware-based communication illustrated in FIGS. 5A to 5C may be used may be set differently. However, there is a need to increase DW duration and decrease DW interval to meet high latency requirements.

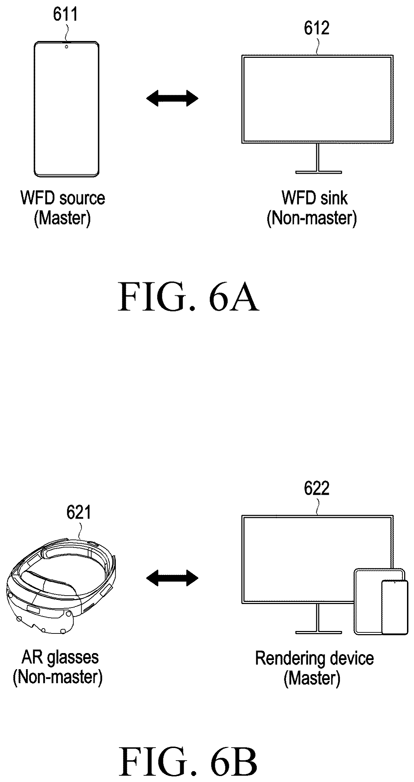

FIG. 6A illustrates an example of Wi-Fi Aware-based communication according to an embodiment of the disclosure.

Referring to FIG. 6A, a first electronic device (e.g., mobile phone) 611 may operate as a Wi-Fi Display (WFD) source device and a master device, and a second electronic device (e.g., tablet PC) 612 may operate as a WFD sink device and a non-master device.

The first electronic device 611 may perform Wi-Fi Aware-based communication with the second electronic device 612, and content of the first electronic device 611 may be streamed on the second electronic device 612.

However, when data transmission starts after device discovery and service discovery, content of the first electronic device 611 may not be streamed on the second electronic device 612 at least during the DW period (e.g., 16 TU/512 TU = 3.125%). The problem may be solved to some extent through buffering, but the first electronic device 611 and the second electronic device 612 streaming WFD do not need to perform DW operation, and adjustment and/or resetting of the DW may be required to enhance streaming efficiency and quality.

FIG. 6B illustrates an example of Wi-Fi Aware-based communication according to an embodiment of the disclosure.

Referring to FIG. 6B, a first electronic device (e.g., AR glasses) 621 may operate as a non-master device, and a second electronic device (e.g., rendering device) 622 may operate as a master device.

When the first electronic device 621 has difficulty with self-rendering, it may be Wi-Fi Aware-based connected to the second electronic device 622 with rendering capability, and content rendered in the second electronic device 622 may be streamed in real-time on the first electronic device 621.

However, when data transmission starts after device discovery and service discovery, content rendered in the second electronic device 622 may not be streamed in real-time on the first electronic device 621 at least during the DW period.

The disclosure proposes a method of adjusting DW duration and/or DW interval to enhance communication efficiency and quality for Wi-Fi Aware-based services.

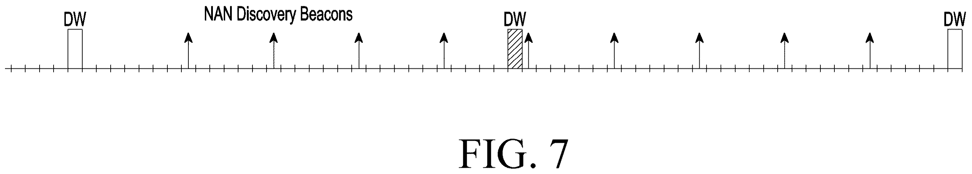

FIG. 7 is a view illustrating a discovery window during Wi-Fi Aware communication according to an embodiment of the disclosure.

Referring to FIG. 7, NAN management frames may be transmitted and/or received in a specific DW (e.g., DW6), and NAN discovery beacons may be transmitted and/or received at regular intervals.

According to an embodiment, the electronic devices supporting Wi-Fi Aware communication may transmit and/or receive at least one of a NAN synchronization beacon, a NAN service discovery frame (SDF), and a NAN action frame (NAF) in a specific DW (e.g., DW6).

FIG. 8 is a view illustrating an operation of managing a discovery window during Wi-Fi Aware communication according to an embodiment of the disclosure.

Method (1) and/or Method (2) below may be implemented as DW adjustment methods to enhance communication efficiency and quality for Wi-Fi Aware-based services.

    Method (1): Contention mitigation within DW;
    Method (2): Limiting the number of Wi-Fi Aware devices within DW;

Referring to FIG. 8, to implement Method (1), the electronic devices supporting Wi-Fi Aware communication may be set to mitigate transmission competition for beacons and/or frames in a specific DW (e.g., DW6).

To implement Method (2), a first electronic device 801, a fourth electronic device 804, and a seventh electronic device 807 may be set to use a first DW 811, a second electronic device 802, a fifth electronic device 805, and a ninth electronic device 809 may be set to use a second DW 812, and a third electronic device 803, a sixth electronic device 806, and an eighth electronic device 808 may be set to use a third DW 813.

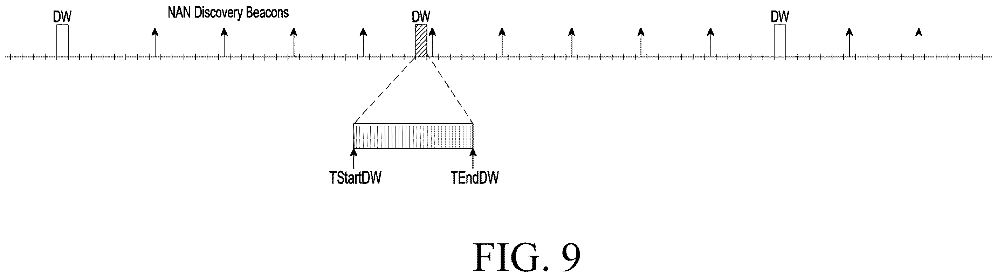

FIG. 9 is a view illustrating a contention mitigation method within a discovery window during Wi-Fi Aware communication according to an embodiment of the disclosure.

Electronic devices supporting Wi-Fi Aware communication may be set to mitigate transmission competition for beacons and/or frames in a specific DW (e.g., DW6).

Referring to FIG. 9, a start time of the DW (TStartDW) and an end time of the DW (TEndDW) may be defined in a specific DW (e.g., DW6). In this case, a time (Tpkt(p)) where a packet p may be transmitted in a specific DW may satisfy Equation 1.

$$[\text{Equation 1}]$$

$$\text{TStartDW} \leq \text{Tpkt(p)} \leq \text{TEndDW}$$

<When a packet p to be transmitted in a specific DW is a NAN synchronization beacon>

When the packet p is a NAN synchronization beacon, the transmittable time (Tpkt(p)) may satisfy Equation 2.

$$[\text{Equation 2}]$$

$$\text{Tpkt(p)} = \text{TStartDW} + \text{mod(HC,10)} \times 40 \times \text{aSlotTime}$$

Here, HC may mean a hop count to the Anchor Master. Further, aSlotTime is a minimum time unit defined in the physical layer and its value may vary for each physical layer specification.

When HC=0, a back-off counter (c_dwb) for the NAN synchronization beacon may be randomly selected from [0, CW_RS]. According to an embodiment, CW_RS may be set to 15. When HC≠0, CW_RS may be set to 31.

<When multiple NAN SDFs (service discovery frames) and/or NAFs (NAN action frames) are buffered for transmission before the start of a specific DW>

Tpkt(p) of the first frame may be set to TStartDW. Tpkt(p) of a subsequent frame may be set to a time after the transmission completion time of a preceding frame.

A back-off counter (c_dw) may be randomly selected from [0, CW]. According to an embodiment, CW may be set to 511. Trs(p) may be randomly selected from [Tpkt(p), TEndDW]. When c_dw≠0 at Trs(p), c_dw may be randomly selected from [0, CW_RS] when the selected value is less than a residual value.

An operation of decreasing the back-off counter (c_dw) while decreasing the back-off counter (c_dwb) for the NAN synchronization beacon may be stopped (i.e., synchronization beacon has higher priority).

According to an embodiment, when an SDF or NAF is carried over from a previous DW because contention countdown is not completed, the back-off counter (c_dw) may be set to a residual counter value remaining from the previous DW.

According to an embodiment, if a Wi-Fi Aware device determines that the medium is not in use for a CW length within the DW, the Wi-Fi Aware device may assume that there is no additional Wi-Fi Aware transmission. In this case, CW×aSlotTime may be about 4.6 ms (CW=511, aSlotTime=9us).

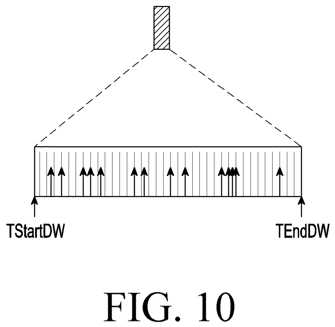

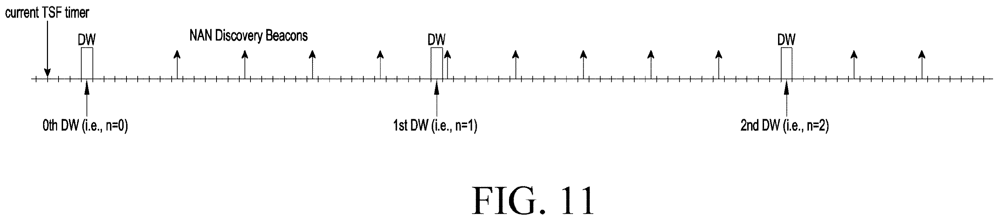

FIGS. 10 and 11 are views illustrating a method of limiting the number of Wi-Fi Aware devices within a discovery window used during Wi-Fi Aware communication according to an embodiment of the disclosure.

Referring to FIG. 10, a start time of the DW (TStartDW) and an end time of the DW (TEndDW) may be defined in a specific DW (e.g., DW6). The plurality of packets may be transmitted between the start time of the DW (TStartDW) and the end time of the DW (TEndDW).

Referring to FIG. 11, a current timing synchronization function (TSF) timer for a Wi-Fi Aware device may be set. The Wi-Fi Aware device may set and/or maintain a variable transmit window (TW). An initial value of the variable TW may be set to 0.

A Wi-Fi Aware device having a new frame for transmission (TX) may select a random integer n from [0,TW].

The Wi-Fi Aware device may start channel access for frame transmission at the start of the nth DW based on the TSF value of the device. In this case, n=0 may indicate a DW having a start time greater than the current TSF timer value.

In FIG. 11, e.g., n=0 may correspond to a first DW 1101, n=1 may correspond to a second DW 1102, and n=2 may correspond to a third DW 1103.

According to an embodiment, if a packet transmission time within a specific frame is before a 0.75×DW duration time, TW may be set to satisfy TW=max(0,TW-1).

According to an embodiment, if a packet transmission time within a specific frame is not before a 0.75×DW duration time, TW may be set to satisfy TW=min(16,TW+2).

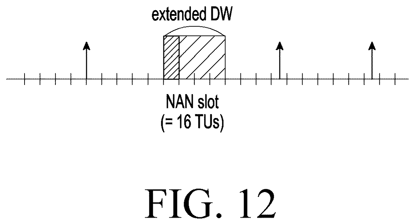

FIG. 12 illustrates an example of setting the duration of an adaptive discovery window used during Wi-Fi Aware communication according to an embodiment of the disclosure.

The disclosure proposes a method of setting an adaptive DW to adaptively respond to temporal environment state or state changes.

From the perspective of a Wi-Fi Aware device, two consecutive frames may be disposed in temporarily faraway DWs.

T_last (normalized by the duration of the DW) may correspond to a transmission time or reception time of the last frame transmitted (TX) within the DW. For example, if the last frame is transmitted at a 0.65×DW duration time, T_last may be set to 0.65. According to an embodiment, T_last may satisfy a condition of 0≤T_last≤1.

The duration of the DW (i.e., the end time of the DW (TEndDW) - the start time of the DW (TStartDW)) may be adjusted according to the T_last value. According to an embodiment, when the start time of the DW (TStartDW) is fixed, the end time of the DW (TEndDW) may be adjusted based on the T_last value.

According to an embodiment, if T_last>0.5+a is satisfied, DW duration index=min(4, DW duration index+1) may be set. Here, a may be a preset threshold.

According to an embodiment, a relationship between the DW duration index and DW duration may be set based on Equation 3.

[Equation 3]

$$DW\ duration = 16 \times 2^{\wedge}(DW\ duration\ index - 1)$$

Here, the DW duration index may be set to one value in a set of {1,2,3,4}, and the DW duration may be set to one value in a set of {16,32,64,128}. The unit of the value of DW duration may be TU.

In other words, the DW duration may be adjustable between a minimum of 16 TU and a maximum of 128 TU considering channel switching overhead and STA mode time guarantee, and the value of the DW duration index may be set to any one of 1 to 4.

According to an embodiment, if T_last>0.5-b is satisfied, DW duration index=max(1, DW duration index-1) may be set. Here, b may be a preset threshold.

Referring to FIG. 12, the DW may be extended based on the T_last value. The DW duration index for the extended DW may be set to 3, and the DW duration may be set to 64 TUs.

According to an embodiment, a probability-based maximum likelihood estimation technique may be used for DW duration adaptation.

Using a value related to the time when the final Wi-Fi Aware frame (SDF or NAF) was received in the ith DW period (DWi) (a value normalized by DW duration), the number of Wi-Fi Aware devices (Ni) participating in DWi, which corresponds to congestion, may be estimated.

According to an embodiment, the number of Wi-Fi Aware devices (Ni) participating in DWi may be estimated using a value related to the time when the final Wi-Fi Aware frame (SDF or NAF) was received in DWi and a value(s) related to the time when previous frame(s) were received (values normalized by DW duration). According to an embodiment, the value related to the time when the previous frame was received may be used as input in vector form.

The $Pr\{N|T_{RX}\}$ value is a probability for the number of Wi-Fi Aware devices (N) participating in the DW given an observation value (RX), and may be derived through Bayes' Theorem as shown in Equation 4.

[Equation 4]

$$Pr\{N = n | T_{RX} = \tilde{t}_{RX}\} = \frac{Pr\{N=n\} \, Pr\{\tilde{t}_{RX}|N=n\}}{Pr\{N=1\} \, Pr\{\tilde{t}_{RX}|N=1\} + \cdots + Pr\{N=n\} \, Pr\{\tilde{t}_{RX}|N=n\} + \cdots}$$

When a distribution for a random variable N (i.e., prior probability $Pr\{N=n\}$) is unknown in Equation 4, it may generally be calculated assuming a uniform distribution. According to an embodiment, when a $Pr\{N=n\}$ distribution may be obtained and/or estimated based on statistical data, accuracy enhancement may be expected.

After estimating the number of Wi-Fi Aware devices (Ni) participating in DWi, **($Pr\{T_{last} < \delta_i|N_i\}$)** which is a probability of completing SDF and/or NAF exchange within duration $\delta_i$ in DWi may be calculated. According to an embodiment, the **$Pr\{T_{last} < \delta|N\}$** value may be derived through mathematical analysis (e.g., Markov analysis).

$Pr\{T_{last} < \delta|T_{RX}\}$ may mean a probability of completing SDF and/or NAF exchange within DW duration $\delta$ (unit: TU). According to an embodiment, $Pr\{T_{last} < \delta|T_{RX}\}$ may be determined based on Equation 5.

[Equation 5]

$$Pr\{T_{last} < \delta|T_{RX}\} = \sum_{n=1}^{\infty} Pr\{T_{last} < \delta|N\} \times Pr\{N|T_{RX}\}$$

The time of the last frame within the DW is probabilistically estimated through measured (or observed) input value(s), which are reception time(s) for Wi-Fi Aware frames, and the DW duration may be adjusted to satisfy the threshold by comparing with a probability value threshold of not completing service discovery and data path setup within the current DW given as a hyper-parameter of the algorithm.

For example, when $Pr\{T_{last} < 16|T_{RX}\}$ =0.85, this indicates that the probability of completing SDF and/or NAF exchange within 16TU is 85% and, when the threshold is 0.05, the DW duration may be increased to operate so that the probability value becomes 0.95 or higher.

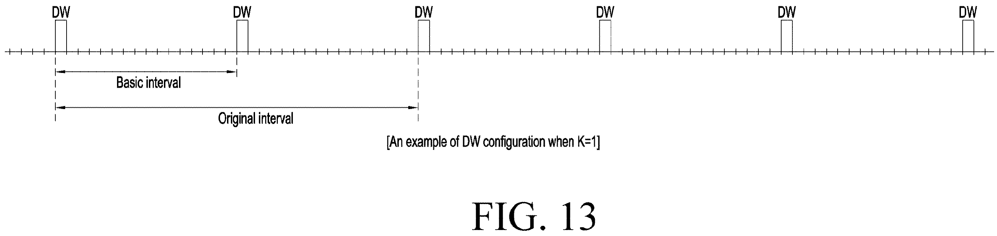

FIG. 13 illustrates an example of adjusting the interval of an adaptive discovery window used during Wi-Fi Aware communication according to an embodiment of the disclosure.

A Wi-Fi Aware device may adaptively adjust the DW interval for responsiveness and power saving. For example, a Wi-Fi Aware device may adaptively adjust the DW interval for responsiveness in an instant communication mode. For example, a Wi-Fi Aware device may adaptively adjust the DW interval for fast discovery and NDP setup.

According to an embodiment, an original interval between DWs during Wi-Fi Aware communication may be fixed and used as a specific value $d_0$ (e.g., 512TUs).

According to an embodiment, a basic interval between consecutive DWs may be set to $d_0/2^k$. Here, k may be set as an integer value.

According to an embodiment, k may be set to any one value in a set of {0,1,2,3}. For example, if $d_0$=512 and k=1, the basic interval may be set to 256 TUs, and if $d_0$=512 and k=2, the basic interval may be set to 128 TUs.

According to an embodiment, when k is a negative integer less than 0, the basic interval may be set to a value greater than $d_0$ (e.g., 512TUs).

Referring to FIG. 13, when $d_0$=512 and k=1, the original interval and basic interval between DWs may be set differently from each other. In this case, the original interval may be set to 512 TUs, and the basic interval may be set to 256 TUs.

Among a plurality of electronic devices supporting Wi-Fi Aware communication, a master device is mandatorily set to a wake up state in all DWs on the basic interval.

Among a plurality of electronic devices supporting Wi-Fi Aware communication, a non-master device may be optionally set to a wake up state in DWs on the basic interval.

According to an embodiment, the DW interval or basic interval may be adjusted according to a serving service of an electronic device. According to an embodiment, a k value for determining the basic interval may be set differently according to latency requirements of a service.

According to an embodiment, a neighboring electronic device may receive or obtain an adjusted DW interval (or basic interval) and apply the adjusted DW interval (or basic interval) to beacons and/or frames (e.g., SDF) for at least one of serving services.

According to an embodiment, NAN management frames such as a NAN discovery frame, a NAN synchronization frame, and a NAN SDF frame may mandatorily (M) or optionally (O) include a Device Capability attribute as illustrated in Table 1.

[Table 1] NAN attributes in NAN Beacon frames and SDF frames

| Attributes | NAN beacon frames | | NAN SDF frames | | | | |
|---|---|---|---|---|---|---|---|
| | Synchronization | Discovery | Publish | | | Subscribe | Follow-up |
| | | | Data required | Ranging required | Otherwise | | |
| Device Capability attribute | YES/O | YES/O | YES/M | YES/M | YES/O | YES/O | YES/O |

Referring to Table 1, e.g., a NAN discovery frame and a NAN synchronization frame may optionally include a Device Capability attribute ("YES/O"). For example, among NAN SDF frames, publish- data required may mandatorily include a Device Capability attribute ("YES/M").

According to an embodiment, a Device Capability attribute including an adjusted DW duration may be included in NAN synchronization beacon frames.

According to an embodiment, a Device Capability attribute including an adjusted DW interval may be included in NAN SDF frames.

The Device Capability attribute may include a Committed DW Information field format described in Table 2.

[Table 2] Committed DW Information field format

| Field | Size (bits) | Value | Description |
|---|---|---|---|
| 2.4 GHz DW | b0-b2 | Variable | Value 0 indicates no wake up for any 2.4 GHz DW, which can be used if there is another Device Capability attribute indicating Committed available at DW0<br>Wake up every $2^{(n-1)}$ DWs<br>Value 6 and 7 are reserved |
| 5 GHz DW | b3-b5 | Variable | Value 0 indicates no wake up for any 5 GHz DW<br>Wake up every $2^{(n-1)}$ DWs<br>Value 6 and 7 are reserved |
| | | | |
| Reserved | b14-b15 | Reserved (0) | Reserved |

Referring to Table 2, an index of DW interval for 2.4 GHz DW (e.g., $k \in \{0,1,2,3\}$) may be indicated using 2 reserved bits (value 6 and 7) in the 2.4 GHz DW field.

Referring to Table 2, an index of DW interval for 5 GHz DW field (e.g., $k \in \{0,1,2,3\}$) may be indicated using 2 reserved bits (value 6 and 7) in the 5 GHz DW field.

Referring to Table 2, an index of DW duration may be indicated using 2 reserved bits in the Reserved field. The index of the DW duration may be set to any one value among a set of {0,1,2,3}.

According to an embodiment, NAN management frames such as a NAN discovery frame, a NAN synchronization frame, and/or a NAN SDF frame may include a Vendor Specific attribute format as illustrated in Table 3.

[Table 3] Vendor Specific attribute format

| Field | Size (octets) | Value | Description |
|---|---|---|---|
| Attribute ID | 1 | 0xDD | Identifies the type of NAN attribute |
| Length | 2 | Variable | Length of the following fields in the attribute |
| OUI | 3 | Variable | Vendor Specific OUI |
| Body | Variable | Variable | Vendor Specific body that is implementation specific |

According to an embodiment, NAN management frames such as a NAN discovery frame, a NAN synchronization frame, and/or a NAN SDF frame may include a vendor specific Discovery Window attribute as illustrated in Table 4.

[Table 4] Discovery Window attribute format

| Field | Size (octets) | Value | Description |
|---|---|---|---|
| Attribute ID | 1 | 0xDD | Identifies the type of NAN attribute |
| Length | 2 | Variable | Length of the following fields in the attribute |
| OUI | 3 | 0x84-25-19 | Samsung Electronics specific OUI |
| DW Duration Index | 1 | Variable | Bit 0-1: index of DW duration in 2.4 GHz<br>Bit 2-3: index of DW duration in 5 GHz<br>Bit 4-5: index of DW duration in 6 GHz<br>Bit 6-7: Reserved |
| DW Interval Index | 1 | Variable | Bit 0-1: index of DW interval in 2.4 GHz<br>Bit 2-3: index of DW interval in 5 GHz<br>Bit 4-5: index of DW interval in 6 GHz<br>Bit 6-7: Reserved |

Referring to Table 4, the Discovery Window attribute format may include a DW Duration Index field and a DW Interval Index field.

According to an embodiment, it may also be possible to increase the size of the DW Interval Index field (e.g., 2 octets) to set the DW interval to exceed 512 TU (e.g., 1024 TU, 2048 TU). Accordingly, interruption may be minimized when supporting streaming services such as Miracast.

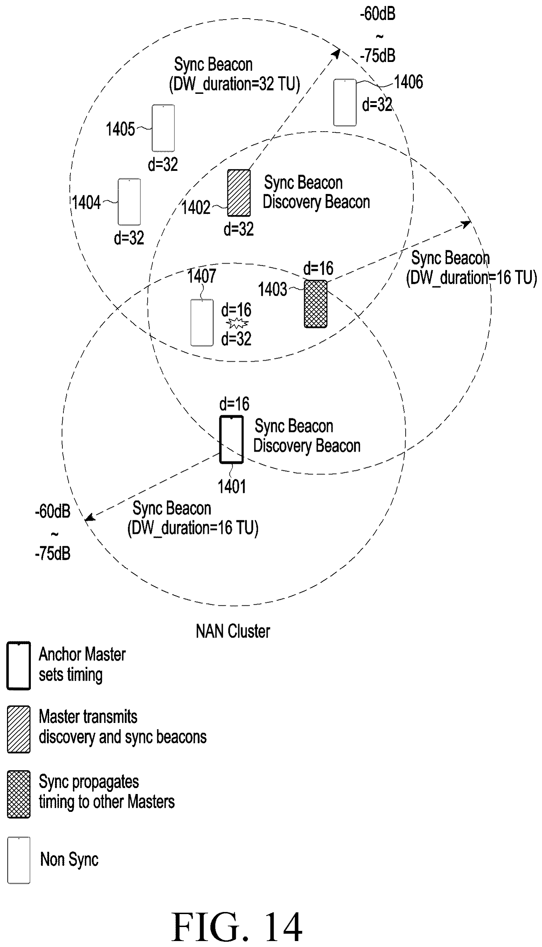

FIG. 14 illustrates an example of a cluster to which an adaptive discovery window used during Wi-Fi Aware communication is applied according to an embodiment of the disclosure.

Among electronic devices supporting Wi-Fi Aware communication, each of a master device and a non-master sync device may adjust DW duration based on a previous DW state.

Among electronic devices supporting Wi-Fi Aware communication, a non-master non-sync (NMNS) device may set DW duration according to received synchronization beacon frame(s).

Referring to FIG. 14, an anchor master device 1401 may set timing information and transmit a Sync Beacon and Discovery Beacon. The duration of the DW in which the Sync Beacon of the anchor master device 1401 is transmitted may be set to 16TUs.

A master device 1402 may transmit a Sync Beacon and Discovery Beacon. The duration of the DW in which the Sync Beacon of the master device 1402 is transmitted may be set to 32TUs.

A sync device 1403 may propagate timing information to other devices (or master devices), and the duration of the DW in which the Sync Beacon of the sync device 1403 is transmitted may be set to 16TUs.

The duration of the DW for each of a first non sync device 1404, a second non sync device 1405, and a third non sync device 1406 may be set to 32TUs.

However, the duration of the DW for a fourth non sync device 1407 may be set to 16TUs or 32TUs. According to an embodiment, the fourth non sync device 1407 may select one DW duration from among 16TUs and 32TUs. According to an embodiment, the fourth non sync device 1407 may select 32TUs, which is the larger value among 16TUs and 32TUs, as the DW duration.

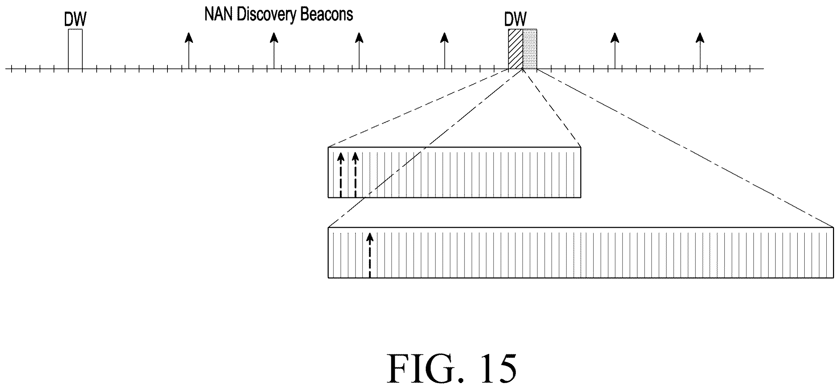

FIG. 15 illustrates an example of an adaptive discovery window used during Wi-Fi Aware communication according to an embodiment of the disclosure.

Referring to FIGS. 14 and 15, the fourth non sync device 1407 may select and apply a larger DW duration (e.g., 32TUs) from among candidate DW durations (e.g., 16TUs and 32TUs) in a specific DW (e.g., DW6).

FIG. 16 illustrates an example of a cluster to which an adaptive discovery window used during Wi-Fi Aware communication is applied according to an embodiment of the disclosure.

Referring to FIG. 16, an anchor master device 1601 may set timing information and transmit a Sync Beacon and Discovery Beacon. The duration of the DW in which the Sync Beacon of the anchor master device 1601 is transmitted may be set to 32TUs.

A master device 1602 may transmit a Sync Beacon and Discovery Beacon. The duration of the DW in which the Sync Beacon of the master device 1602 is transmitted may be set to 16TUs.

Each of a first sync device 1603 and a second sync device 1604 may propagate timing information to other devices (or master devices), and the duration of the DW in which the Sync Beacon of the first sync device 1603 is transmitted may be set to 16TUs, and the duration of the DW in which the Sync Beacon of the second sync device 1604 is transmitted may be set to 32TUs.

The duration of the DW for each of a first non sync device 1605 and a second non sync device 1606 may be set to 32TUs. The duration of the DW for a third non sync device 1607 may be set to 16TUs.

However, the duration of the DW for each of a fourth non sync device 1608, a fifth non sync device 1409, and a sixth non sync device 1410 may be set to 16TUs or 32TUs.

According to an embodiment, each of the fourth non sync device 1608, the fifth non sync device 1409, and the sixth non sync device 1410 may select one DW duration from among 16TUs and 32TUs. According to an embodiment, at least one of the fourth non sync device 1608, the fifth non sync device 1409, and the sixth non sync device 1410 may select 32TUs, which is the larger value among 16TUs and 32TUs, as the DW duration.

The duration of the DW for the third non sync device 1607 is set to 16TUs, and the fourth non sync device 1608 may select one DW duration from among 16TUs and 32TUs. In this case, NDP setup may be set between the third non sync device 1607 and the fourth non sync device 1608, and the duration of the DW of the fourth non sync device 1608 may be set to 32TUs. If the third non sync device 1607 does not receive an SDF or NAF within the DW, the fourth non sync device 1608 may retransmit the SDF or NAF in a subsequent DW.

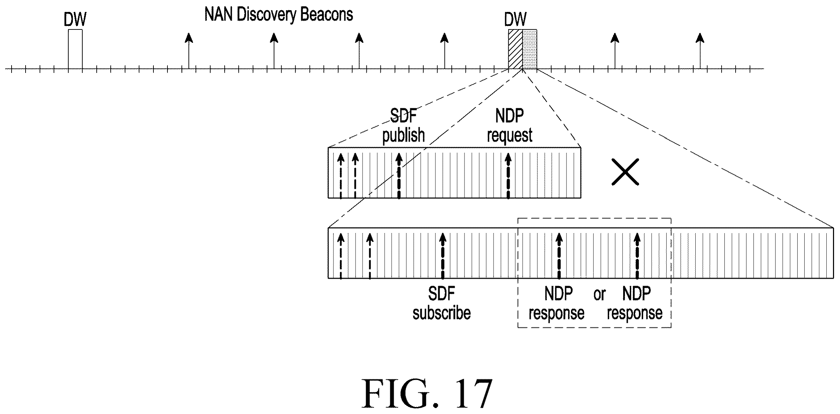

FIG. 17 illustrates an example of an adaptive discovery window used during Wi-Fi Aware communication according to an embodiment of the disclosure.

Referring to FIGS. 16 and 17, the third non sync device 1607 may transmit a Sync beacon, an SDF publish message, and an NDP request message within a DW (e.g., DW6) where the duration of the DW is set to 16TUs.

The fourth non sync device 1608 may transmit a Sync beacon, an SDF subscribe message, and an NDP response message within a DW (e.g., DW6) where the duration of the DW is set to 32TUs.

According to an embodiment, even when the third non sync device 1607 does not receive an NDP response message within the DW, the fourth non sync device 1608 may retransmit the NDP response message in the next DW.

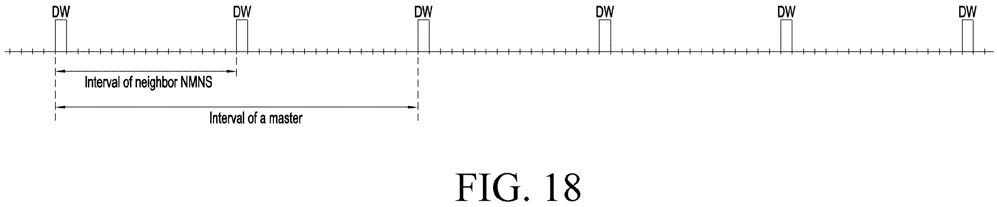

FIG. 18 illustrates an example of adjusting the interval of an adaptive discovery window used during Wi-Fi Aware communication according to an embodiment of the disclosure.

Different parameters of the DW (e.g., interval of the DW) may be applied to different devices within a cluster.

An arbitrary device may adjust the interval of the DW according to serving service(s) and latency requirements.

According to an embodiment, when a master (or non-master sync) device extends the interval of the DW larger than a neighboring NMNS device, the NMNS device may not be able to synchronize during the DW. Therefore, the interval of the DW may be adjusted (or extended) when one or more of the following conditions 1) and 2) are met.

1) The device receives a synchronization beacon frame having an RSSI higher than RSSI_close (e.g., -60 dBm) and a DW interval value of a source device less than or equal to a target interval value;
2) The device receives at least 3 individual synchronization beacon frames having RSSI_middle (e.g., -75 dBm) as well as a DW interval value of a source device less than or equal to a target interval value;

If one or more of conditions 1) and 2) are not met, the device should restore the interval value of the DW.

Referring to FIG. 18, the DW interval between neighboring NMNS devices (Interval of neighbor NMNS) and the DW interval between master devices (Interval of a master) may be set differently.

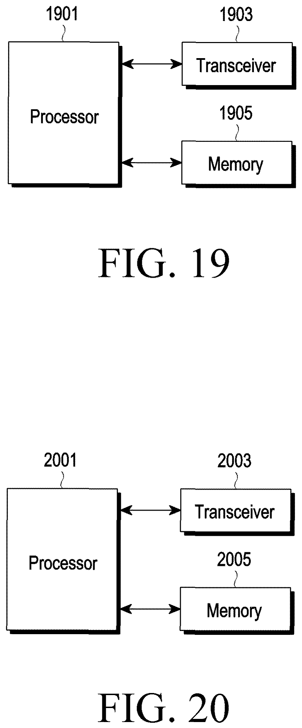

FIG. 19 is a view illustrating a structure of a first electronic device according to an embodiment of the disclosure.

The first electronic device of FIG. 19 may be implemented as a station, the electronic device, or electronic device (sender) transmitting data using NAN (or Wi-Fi Aware) communication illustrated in FIGS. 1 to 18.

Referring to FIG. 19, the first electronic device may include a processor 1901, a transceiver 1903, and memory 1905. In the disclosure, the processor 1901 may be defined as a circuit or application-specific integrated circuit or at least one processor. The processor 1901 may also be referred to as a control unit or controller.

The processor 1901 may control the overall operation of the first electronic device described in the embodiments proposed in the disclosure. Specifically, the processor 1901 may control operations of a station, the electronic device, or electronic device (sender) transmitting data using NAN (or Wi-Fi Aware) communication illustrated in FIGS. 1 to 18, for example.

The transceiver 1903 may transmit/receive signals with other electronic devices or access points. The transceiver 1903 may also be referred to as a transceiver unit or transceiver.

The memory 1905 may store at least one of the information transmitted/received through the transceiver 1903 and information generated through the processor 1901.

According to an embodiment, the processor 1901 may control to transmit a frame including a first index related to an interval of a discovery window (DW) used in Wi-Fi aware communication and a second index related to a duration of the DW to a second electronic device. The processor 1901 may perform Wi-Fi aware communication with the second electronic device in a DW set based on the first index and the second index.

The processor 1901 may control to transmit a synchronization beacon frame in the DW and may transmit or receive a service discovery frame in the DW.

According to an embodiment, the frame may be at least one of a discovery beacon frame, a synchronization beacon frame, and a service discovery frame.

According to an embodiment, the first index and the second index may be indicated by reserved bits included in a device capability attribute of the frame.

According to an embodiment, the first index may be indicated by a DW interval index field included in a discovery window attribute of the frame, and the second index may be indicated by a DW duration index field included in the discovery window attribute of the frame.

According to an embodiment, the duration of the DW and the first index (k) may satisfy Equation 6.

$$[\text{Equation 6}]$$

$$\text{DW duration}= 512/2^{k}$$

According to an embodiment, the duration of the DW and the second index (j) may satisfy Equation 7.

$$[\text{Equation 7}]$$

$$\text{DW duration}=16\times2^{(j-1)}$$

FIG. 20 is a view illustrating a structure of a second electronic device according to an embodiment of the disclosure; and

The second electronic device of FIG. 20 may be implemented as a station, the electronic device, or electronic device (receiver) receiving data using NAN (or Wi-Fi Aware) communication illustrated in FIGS. 1 to 18.

Referring to FIG. 20, the second electronic device may include a processor 2001, a transceiver 2003, and memory 2005. In the disclosure, the processor 2001 may be defined as a circuit or application-specific integrated circuit or at least one processor. The processor 2001 may also be referred to as a control unit or controller.

The processor 2001 may control the overall operation of the second electronic device described in the embodiments proposed in the disclosure. Specifically, the processor 2001 may control operations of a station, the electronic device, or electronic device (receiver) receiving data using NAN (or Wi-Fi Aware) communication illustrated in FIGS. 1 to 18, for example.

The transceiver 2003 may transmit/receive signals with other electronic devices or other access points. The transceiver 2003 may also be referred to as a transceiver unit or transceiver.

The memory 2005 may store at least one of the information transmitted/received through the transceiver 2003 and information generated through the processor 2001.

According to an embodiment, the processor 2001 may receive a frame including a first index related to an interval of a discovery window (DW) used in Wi-Fi aware communication and a second index related to a duration of the DW from a first electronic device. The processor 2001 may perform Wi-Fi aware communication with the first electronic device in a DW set based on the first index and the second index.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

**Claims**

1.  A method of operating a first electronic device performing Wi-Fi aware communication, the method comprising:

    transmitting, to a second electronic device, a frame including a first index related to an interval of a discovery window (DW) used in Wi-Fi aware communication and a second index related to a duration of the DW; and
    performing Wi-Fi aware communication with the second electronic device in a DW set based on the first index and the second index.

2.  The method of claim 1, wherein performing Wi-Fi aware communication includes:

    transmitting a synchronization beacon frame in the DW; and
    transmitting or receiving a service discovery frame in the DW.

3.  The method of claim 1, wherein the frame is at least one of a discovery beacon frame, a synchronization beacon frame, or a service discovery frame.

4.  The method of claim 3, wherein the first index and the second index are indicated by reserved bits included in a device capability attribute of the frame.

5.  The method of claim 3, wherein the first index is indicated by a DW interval index field included in a discovery window attribute of the frame, and wherein the second index is indicated by a DW duration index field included in the discovery window attribute of the frame.

6.  The method of claim 1, wherein the duration of the DW and the first index (k) satisfy Equation 1, and

$$[\text{Equation 1}]$$

$$\text{DW duration} = 512/2^k.$$

7.  The method of claim 1, wherein the duration of the DW and the second index (j) satisfy Equation 2, and

$$[\text{Equation 2}]$$

$$\text{DW duration} = 16 \times 2^{(j-1)}.$$

8.  A method of operating a second electronic device performing Wi-Fi aware communication, the method comprising:

    receiving, from a first electronic device, a frame including a first index related to an interval of a discovery window (DW) used in Wi-Fi aware communication and a second index related to a duration of the DW; and
    performing Wi-Fi aware communication with the first electronic device in a DW set based on the first index and the second index.

9.  The method of claim 8, wherein the first index and the second index are indicated by reserved bits included in a device capability attribute of the frame.

10. The method of claim 8, wherein the first index is indicated by a DW interval index field included in a discovery window attribute of the frame, and wherein the second index is indicated by a DW duration index field included in the discovery window attribute of the frame.

11. A first electronic device performing Wi-Fi aware communication, comprising:

a transceiver; and
a processor, wherein the processor is configured to:

control to transmit, to a second electronic device, a frame including a first index related to an interval of a discovery window (DW) used in Wi-Fi aware communication and a second index related to a duration of the DW; and
perform Wi-Fi aware communication with the second electronic device in a DW set based on the first index and the second index.

12. The first electronic device of claim 11, wherein the processor is configured to:

control to transmit a synchronization beacon frame in the DW; and
transmit or receive a service discovery frame in the DW.

13. The first electronic device of claim 11, wherein the frame is at least one of a discovery beacon frame, a synchronization beacon frame, or a service discovery frame.

14. The first electronic device of claim 13, wherein the first index and the second index are indicated by reserved bits included in a device capability attribute of the frame.

15. A second electronic device performing Wi-Fi aware communication, comprising:

a transceiver; and
a processor, wherein the processor is configured to:

receive, from a first electronic device, a frame including a first index related to an interval of a discovery window (DW) used in Wi-Fi aware communication and a second index related to a duration of the DW; and
perform Wi-Fi aware communication with the first electronic device in a DW set based on the first index and the second index.

FIG. 1

210

220

| Access point | | Station |

Probe request
S201

Probe response
S202

Authentication request
S203

Authentication response
S204

Association request
S205

Association response
S206

FIG. 2A

FIG. 2B

FIG. 3

EP 4 708 971 A1

FIG. 4

EP 4 708 971 A1

FIG. 5A

521

522

Copy

Paste

Paragraph

Lists

# FIG. 5B

532

531

# FIG. 5C

611

612

WFD source
(Master)

WFD sink
(Non-master)

# FIG. 6A

622

621

AR glasses
(Non-master)

Rendering device
(Master)

# FIG. 6B

NAN Discovery Beacons

DW DW DW

## FIG. 7

2) Limiting the number of NAN devices in a DW

801 802 803 804 805 806 807 808 809

NAN Discovery Beacons

DW

DW

1) Contention mitigation in a DW

**FIG. 8**

DW                    NAN Discovery Beacons                    DW                                                           DW

TStartDW          TEndDW

## FIG. 9

TStartDW

TEndDW

FIG. 10

current TSF timer

DW        NAN Discovery Beacons        DW                                    DW

0th DW (i.e., n=0)                          1st DW (i.e., n=1)                    2nd DW (i.e., n=2)

# FIG. 11

extended DW

NAN slot
(= 16 TUs)

# FIG. 12

DW　　　　　DW　　　　　DW　　　　　DW　　　　　DW　　　　　DW

|←——— Basic interval ———→|

|←——————————— Original interval ———————————→|

[An example of DW configuration when K=1]

FIG. 13

FIG. 14

FIG. 15

FIG. 16

NAN Discovery Beacons

DW

DW

SDF
publish

NDP
request

SDF
subscribe

NDP
response

or

NDP
response

FIG. 17

FIG. 18

1901

1903

Processor

Transceiver

1905

Memory

# FIG. 19

2001

2003

Processor

Transceiver

2005

Memory

# FIG. 20

## INTERNATIONAL SEARCH REPORT

| International application No. |
| --- |
| **PCT/KR2024/009128** |

| A. | CLASSIFICATION OF SUBJECT MATTER |
| --- | --- |

**H04W 48/08**(2009.01)i; **H04W 48/16**(2009.01)i; **H04W 40/24**(2009.01)i; **H04W 72/0446**(2023.01)i; **H04L 27/26**(2006.01)i; **H04W 56/00**(2009.01)i; **H04W 84/12**(2009.01)i

According to International Patent Classification (IPC) or to both national classification and IPC

| B. | FIELDS SEARCHED |
| --- | --- |

Minimum documentation searched (classification system followed by classification symbols)

H04W 48/08(2009.01); H04L 9/08(2006.01); H04W 4/06(2009.01); H04W 40/04(2009.01); H04W 40/24(2009.01); H04W 40/32(2009.01); H04W 48/16(2009.01); H04W 56/00(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 와이파이 어웨이(Wi-Fi aware), DW(discovery window), 인터벌(interval), 듀레이션(duration), 인덱스(index), 프레임(frame)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2018-236386 A1 (INTEL CORPORATION) 27 December 2018 (2018-12-27) See page 5, lines 32-34; page 7, lines 3-7; page 8, lines 11-14; page 9, line 1 - page 10, line 3 and page 12, lines 29-30; claims 1 and 11; and figures 5 and 7-8. | 1-5,8-15 |
| A | | 6-7 |
| A | KR 10-2018-0085727 A (QUALCOMM INCORPORATED) 27 July 2018 (2018-07-27) See paragraphs [0071]-[0079]; and figure 10. | 1-15 |
| A | KR 10-2017-0107455 A (QUALCOMM INCORPORATED) 25 September 2017 (2017-09-25) See paragraphs [0067]-[0071]; and figure 6. | 1-15 |
| A | US 2019-0297556 A1 (BRIDGEFY, INC.) 26 September 2019 (2019-09-26) See paragraphs [0055]-[0063]; and figure 6. | 1-15 |

☑ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 September 2024** | **26 September 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/009128** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2015-0319675 A1 (INTEL CORPORATION) 05 November 2015 (2015-11-05) See paragraphs [0081]-[0084]; and figure 8A. | 1-15 |

Form PCT/ISA/210 (second sheet) (July 2022)

## INTERNATIONAL SEARCH REPORT
### Information on patent family members

International application No.

**PCT/KR2024/009128**

| Patent document cited in search report | | | Publication date (day/month/year) | Patent family member(s) | | | Publication date (day/month/year) |
|---|---|---|---|---|---|---|---|
| WO | 2018-236386 | A1 | 27 December 2018 | None | | | |
| KR | 10-2018-0085727 | A | 27 July 2018 | BR | 112018010318 | A2 | 04 December 2018 |
| | | | | CA | 3002071 | A1 | 01 June 2017 |
| | | | | CA | 3002071 | C | 21 September 2021 |
| | | | | CN | 108293179 | A | 17 July 2018 |
| | | | | CN | 108293179 | B | 22 June 2021 |
| | | | | EP | 3381210 | A1 | 03 October 2018 |
| | | | | EP | 3381210 | B1 | 27 October 2021 |
| | | | | JP | 2019-503108 | A | 31 January 2019 |
| | | | | JP | 6720307 | B2 | 08 July 2020 |
| | | | | KR | 10-1979171 | B1 | 15 May 2019 |
| | | | | TW | 201720221 | A | 01 June 2017 |
| | | | | TW | I675603 | B | 21 October 2019 |
| | | | | US | 2017-0150326 | A1 | 25 May 2017 |
| | | | | US | 9888365 | B2 | 06 February 2018 |
| | | | | WO | 2017-091325 | A1 | 01 June 2017 |
| KR | 10-2017-0107455 | A | 25 September 2017 | CN | 107211384 | A | 26 September 2017 |
| | | | | EP | 3251431 | A1 | 06 December 2017 |
| | | | | JP | 2018-506913 | A | 08 March 2018 |
| | | | | US | 10091713 | B2 | 02 October 2018 |
| | | | | US | 2016-0219498 | A1 | 28 July 2016 |
| | | | | WO | 2016-123186 | A1 | 04 August 2016 |
| US | 2019-0297556 | A1 | 26 September 2019 | US | 10368288 | B2 | 30 July 2019 |
| | | | | US | 10420006 | B2 | 17 September 2019 |
| | | | | US | 10764809 | B2 | 01 September 2020 |
| | | | | US | 10945188 | B2 | 09 March 2021 |
| | | | | US | 2018-0054771 | A1 | 22 February 2018 |
| | | | | US | 2018-0054853 | A1 | 22 February 2018 |
| | | | | US | 2019-0342817 | A1 | 07 November 2019 |
| US | 2015-0319675 | A1 | 05 November 2015 | US | 10117162 | B2 | 30 October 2018 |
| | | | | US | 11109306 | B2 | 31 August 2021 |
| | | | | US | 2017-0127342 | A1 | 04 May 2017 |
| | | | | US | 2019-0174400 | A1 | 06 June 2019 |
| | | | | US | 9386512 | B2 | 05 July 2016 |

Form PCT/ISA/210 (patent family annex) (July 2022)